# EUROPEAN PATENT APPLICATION

(11) **EP 4 456 399 A1**
(43) Date of publication of application: **30.10.2024**
(21) Application number: 22909106.1
(22) Date of filing: 25.04.2022
(51) Int. Cl.: H02M 1/36, H02J 7/02

(54) **ON-BOARD CHARGER, DCDC CONVERTER AND CONTROL METHOD**

(30) Priority: 21.12.2021 CN 202111575228
(71) Applicant: Sungrow Power Supply Co., Ltd., Hefei, Anhui 230088 (CN)
(72) Inventor: WANG, Hao, Hefei, Anhui 230088 (CN); WANG, Tengfei, Hefei, Anhui 230088 (CN); XU, Jiangtao, Hefei, Anhui 230088 (CN); XU, Jun, Hefei, Anhui 230088 (CN)
(74) Representative: Epping - Hermann - Fischer
(86) International application number: PCT/CN2022/088912
(87) International publication number: WO 2023/115769

(57) **Abstract**

Provided are an on-board charger, a DCDC converter and a control method. An input end of a high-voltage direct-current conversion circuit is connected to an output end of a power factor correction circuit, an input end of a low-voltage direct-current (LVDC) conversion circuit is connected to an output end of the high-voltage direct-current conversion circuit or the output end of the power factor correction circuit, and an output end of the low-voltage direct-current conversion circuit is connected to a low-voltage battery; and the low-voltage direct-current conversion circuit comprises a main power tube and a controllable switching tube. When the low-voltage direct-current conversion circuit starts, a controller generates a driving signal for the main power tube by using a current loop soft start, such that a current flowing through an inductor gradually increases; a given current value of a current loop depends on a reference current value, which is output by a voltage loop, and an output result of a soft start function; and after the start of the low-voltage direct-current conversion circuit is completed, the voltage loop and the current loop are cascaded to generate a driving signal for the main power tube, and the voltage loop outputs the reference current value to an input end of the current loop, thereby reducing an impact current to the main power tube when the LVDC conversion circuit starts.

## Description

The present application claims priority to Chinese Patent Application No. 202111575228.X, titled "ON-BOARD CHARGER, DCDC CONVERTER AND CONTROL METHOD", filed on December 21, 2021 with the China National Intellectual Property Administration, which is incorporated herein by reference in its entirety.

### FIELD

The present disclosure relates to the technical field of power electronics, and in particular to an on-board charger, a DCDC converter and a control method.

### BACKGROUND

Due to the increasing shortage of global energy, new energy vehicles are becoming increasingly popular. Generally, it is required to charge power battery packs of the new energy vehicles. Many new energy vehicles include on-board chargers (OBCs). Generally, an OBC includes a power factor corrector (PFC), a high-voltage direct-current converter (HVDC), and a low-voltage direct-current converter (LVDC). The PFC is connected to an alternating-current power supply, the HVDC is connected to a high-voltage battery, and the LVDC is connected to a low-voltage battery. The LVDC may obtain power from a direct-current bus and supply the power to the low-voltage battery and a low-voltage electrical appliance such as an air conditioner, a water pump, and a headlight.

The LVDC usually operates in a low-voltage and high-current condition. For example, in a case that the LVDC is implemented as a Buck circuit, a freewheeling diode in the Buck circuit is usually replaced with a MOS transistor, so that a current flows through the MOS transistor during freewheeling, reducing a conduction on loss and a reverse recovery loss of the freewheeling diode. Generally, driving signals of a main power transistor and the MOS transistor in the Buck circuit may be complementary.

However, in starting up the LVDC, the main power transistor bears a relatively large impulse current, seriously endangering the safety of the main power transistor.

### SUMMARY

In order to solve the above technical problems, an on-board charger, a DCDC converter and a control method are provided according to the present disclosure, to reduce the impulse current flowing through the main power transistor in starting up the LVDC, thereby ensuring the safety of the main power transistor.

In order to achieve the above objectives, the following technical solutions are provided according to the embodiments of the present disclosure.

An on-board charger is provided according to an embodiment of the present disclosure. The on-board charger includes a power factor corrector, a high-voltage direct-current converter, a low-voltage direct-current converter, and a controller. An input terminal of the high-voltage direct-current converter is connected to an output terminal of the power factor corrector. An input terminal of the low-voltage direct-current converter is connected to an output terminal of the high-voltage direct-current converter or the output terminal of the power factor corrector. An output terminal of the low-voltage direct-current converter is connected to a low-voltage battery and a low-voltage load. The low-voltage direct-current converter includes a main power transistor and a controllable switching transistor. The controller is configured to: when the low-voltage direct-current converter is performing a startup process, generate a driving signal for the main power transistor by soft starting a current loop to control a current flowing through an inductor connected in series with the main power transistor to be gradually increased, where a predetermined current of the current loop is determined based on a reference current outputted by a voltage loop and an output result of a soft start function; and after the low-voltage direct-current converter completes the startup process, generate a driving signal for the main power transistor by cascading the voltage loop and the current loop, where the voltage loop is configured to output the reference current to an input terminal of the current loop.

Preferably, an input of the current loop includes an output current of the low-voltage direct-current converter and an output result of a minimization unit. The current loop is configured to compare the output current of the low-voltage direct-current converter with the output result of the minimization unit, and then generate the driving signal for the main power transistor based on a comparison result. The minimization unit is configured to determine a smaller value between an output result of the voltage loop and the output result of the soft start function. After a difference between the output current of the low-voltage direct-current converter and the output result of the minimization unit is controlled within a predetermined range, the low-voltage direct-current converter completes the startup process.

Preferably, an input of the voltage loop includes a predetermined reference voltage and an output voltage of the low-voltage direct-current converter. The voltage loop is configured to generate the reference current based on the predetermined reference voltage and the output voltage of the low-voltage direct-current converter and output the reference current to the input terminal of the current loop.

Preferably, the soft start function is a soft start ramp function, and an output result of the soft start ramp function is a current that gradually increases over time to a predetermined current value.

Preferably, the controller is further configured to: when the low-voltage direct-current converter is performing the startup process, control the controllable switching transistor to be turned off; and after the low-voltage direct-current converter completes the startup process, control the main power transistor and the controllable switching transistor to be turned on or turned off in a complementary manner.

Preferably, the controller is further configured to: when the low-voltage direct-current converter is performing the startup process, control the controllable switching transistor to be turned on when the main power transistor is turned off, and control a duty ratio of the controllable switching transistor to be less than a duty ratio of the main power transistor; and after the low-voltage direct-current converter completes the startup process, control the main power transistor and the controllable switching transistor to be turned on or turned off in a complementary manner.

A buck DCDC converter is provided according to the present disclosure. The buck DCDC converter includes a controller, a main power transistor, a controllable switching transistor, and an inductor. The inductor is connected in series with the main power transistor. An output terminal of the buck DCDC converter is connected to a battery. The controller is configured to: when the buck DCDC converter is performing a startup process, generate a driving signal for the main power transistor by soft starting a current loop to control a current flowing through the inductor to be gradually increased, where a predetermined current of the current loop is determined based on a reference current outputted by a voltage loop and an output result of a soft start function; and after the buck DCDC converter completes the startup process, generate a driving signal for the main power transistor by cascading the voltage loop and the current loop, where the voltage loop is configured to output the reference current to an input terminal of the current loop.

Preferably, an input of the current loop includes an output current of the low-voltage direct-current converter and an output result of a minimization unit. The current loop is configured to compare the output current of the low-voltage direct-current converter with the output result of the minimization unit, and then generate the driving signal for the main power transistor based on a comparison result. The minimization unit is configured to determine a smaller value between an output result of the voltage loop and the output result of the soft start function.

Preferably, an input of the voltage loop includes a predetermined reference voltage and an output voltage of the low-voltage direct-current converter. The voltage loop is configured to generate the reference current based on the predetermined reference voltage and the output voltage of the low-voltage direct-current converter and output the reference current to the input terminal of the current loop.

Preferably, the soft start function is a soft start ramp function, and an output result of the soft start ramp function is a current that gradually increases over time to a predetermined current value.

Preferably, the controller is further configured to: when the low-voltage direct-current converter is performing the startup process, control the controllable switching transistor to be turned on when the main power transistor is turned off, and control a duty ratio of the controllable switching transistor to be less than a duty ratio of the main power transistor; and after the low-voltage direct-current converter completes the startup process, control the main power transistor and the controllable switching transistor to be turned on or turned off in a complementary manner.

A method for controlling an on-board charger is provided according to the present disclosure. The on-board charger includes a power factor corrector, a high-voltage direct-current converter, a low-voltage direct-current converter and a controller. An input terminal of the high-voltage direct-current converter is connected to an output terminal of the power factor corrector. An input terminal of the low-voltage direct-current converter is connected to an output terminal of the high-voltage direct-current converter. An output terminal of the low-voltage direct-current converter is connected to a low-voltage battery. The low-voltage direct-current converter includes a main power transistor and a controllable switching transistor. The method includes: generating, when the low-voltage direct-current converter is performing a startup process, a driving signal for the main power transistor by soft starting a current loop to control a current flowing through an inductor connected in series with the main power transistor to be gradually increased, where a predetermined current of the current loop is determined based on a reference current outputted by a voltage loop and an output result of a soft start function; and generating, after the low-voltage direct-current converter completes the startup process, a driving signal for the main power transistor by cascading the voltage loop and the current loop, where the voltage loop is configured to output the reference current to an input terminal of the current loop.

Preferably, the generating, when the low-voltage direct-current converter is performing a startup process, a driving signal for the main power transistor by soft starting a current loop includes: inputting an output current of the low-voltage direct-current converter and an output result of a minimization unit to the current loop; comparing, by the current loop, the output current of the low-voltage direct-current converter with the output result of the minimization unit, and generating, by the current loop, the driving signal for the main power transistor based on a comparison result; and determining, by the minimization unit, a smaller value between an output result of the voltage loop and the output result of the soft start function.

Preferably, the generating a driving signal for the main power transistor by cascading the voltage loop and the current loop includes: inputting a predetermined reference voltage and an output voltage of the low-voltage direct-current converter to the voltage loop; and generating, by the voltage loop, the reference current based on the predetermined reference voltage and the output voltage of the low-voltage direct-current converter, and outputting, by the voltage loop, the reference current to the input terminal of the current loop.

Preferably, the method further includes: controlling, when the low-voltage direct-current converter is performing the startup process, the controllable switching transistor to be turned on when the main power transistor is turned off, and controlling a duty ratio of the controllable switching transistor to be less than a duty ratio of the main power transistor; and controlling, after the low-voltage direct-current converter completes the startup process, the main power transistor and the controllable switching transistor to be turned on or turned off in a complementary manner.

Preferably, the soft start function is a soft start ramp function, and an output result of the soft start ramp function is a current that gradually increases over time to a predetermined current value.

It can be seen from the above technical solutions that the present disclosure has the following beneficial effects.

In the technical solutions according to the present disclosure, in order to reduce the impulse current flowing through the main power transistor in starting up the low-voltage direct-current converter, the current loop functions and the voltage loop does not function. Since the voltage loop does not function, a current soft start control manner, rather than a voltage soft start control manner, is adopted. The output voltage and the predetermined reference voltage are inputted to the voltage loop, and the output voltage is relatively small in starting up the low-voltage direct-current converter, so that the output of the voltage loop is invalid. That is, the voltage loop does not function, and only the current loop functions in the control loop. Since the current loop may be controlled in a current soft start manner, the current soft start manner is adopted in starting up the low-voltage direct-current converter, controlling the current flowing through the main power transistor to gradually increase, thereby minimizing the impact on the forward current of the main power transistor.

### BRIEF DESCRIPTION OF THE DRAWINGS

In order to more clearly describe the technical solutions in the embodiments of the present disclosure or the technical solutions in the conventional technology, drawings to be used in the description of the embodiments or the conventional technology are briefly described hereinafter. It is apparent that the drawings described below are merely used for describing the embodiments of the present disclosure, and those skilled in the art can obtain other drawings according to the provided drawings without any creative effort.
Figure 1 is a schematic diagram of an on-board charger according to an embodiment of the present disclosure;
Figure 2 is a schematic diagram of an LVDC in an on-board charger according to an embodiment of the present disclosure;
Figure 3 is a schematic diagram of a dual-loop control manner in which a voltage loop and a current loop are cascaded according to an embodiment of the present disclosure;
Figure 4 a schematic diagram shows a current soft start manner according to an embodiment of the present disclosure;
Figure 5 shows an equivalent circuit in which S1 is turned on and S2 is turned off according to an embodiment of the present disclosure;
Figure 6 shows an equivalent circuit in which S1 is turned off and S2 is turned on according to an embodiment of the present disclosure;
Figure 7 is a schematic diagram of a low-voltage direct-current converter according to the conventional technology; and
Figure 8 is a flowchart of a method for controlling an on-board charger according to an embodiment of the present disclosure.

### DETAILED DESCRIPTION OF EMBODIMENTS

In order to facilitate understanding the solutions according to the embodiments of the present disclosure, an application scenario for the solutions according to the embodiments of the present disclosure is described before describing the method according to the embodiments of the present disclosure.

### Embodiments of an on-board charger

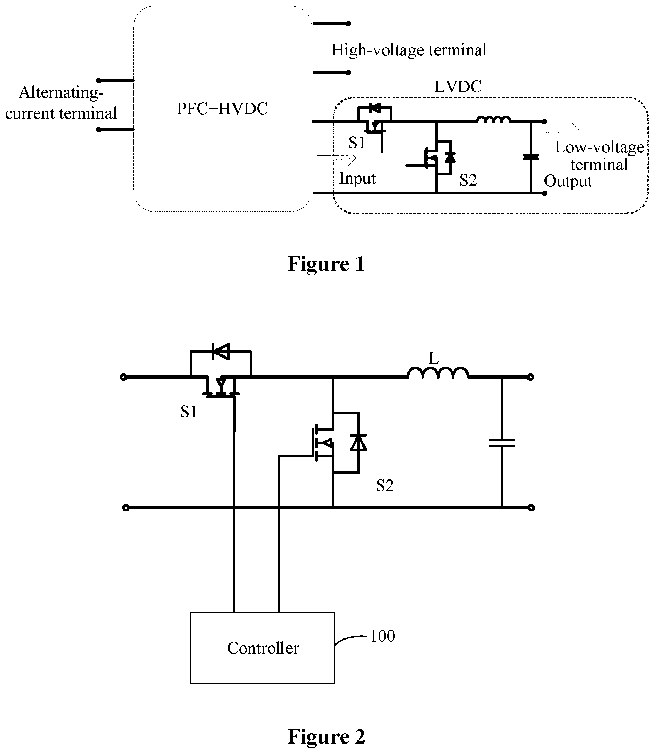

Referring to Figure 1, Figure 1 is a schematic diagram of an on-board charger according to an embodiment of the present disclosure.

An OBC according to an embodiment of the present disclosure includes three terminals, that is, an alternating-current terminal, a high-voltage terminal and a low-voltage terminal as shown in Figure 1. The OBC includes a PFC, a HVDC and an LVDC. An input terminal of the PFC is connected to an alternating-current power supply. An input terminal of the HVDC is connected to an output terminal of the PFC. An output terminal of the HVDC is connected to a high-voltage battery. An input terminal of the LVDC is connected to the output terminal of the HVDC. An output terminal of the LVDC is connected to a low-voltage battery.

In the embodiment, descriptions are provided by taking the LVDC as a bulk converter, such as a Buck circuit, as an example. The Buck circuit includes a main power transistor S1, an inductor and a controllable switching transistor S2. A first terminal of S1 is connected to a positive input terminal of the LVDC, and a second terminal of S1 is connected to a positive output terminal of the LVDC via the inductor. A first terminal of S2 is connected to the second terminal of S1, a second terminal of S2 is connected to a negative input terminal of the LVDC, and the second terminal of S2 is connected to a negative output terminal of the LVDC. The output terminal of the LVDC is connected in parallel with a capacitor. In the conventional Buck circuit, the controllable switching transistor S2 may be a freewheeling diode. In order to reduce power consumption caused by the diode, the controllable switching transistor is used instead of the diode. For example, the controllable switching transistor may be an MOS transistor. The conduction loss and the switching loss of the MOS transistor are less than the conduction loss and the switching loss of the diode respectively.

In the conventional technology, in order to solve the problem of an excessive impulse current in starting up the LVDC, a controllable switch is usually connected in series at the output terminal of the LVDC and a voltage soft start control manner is adopted. However, the solution of connecting the controllable switch in series at the output terminal of the LVDC increases the hardware costs.

In the present disclosure, in order to reduce the impact on the forward current of S1 in starting up the LVDC, the LVDC is started up in a current soft start manner. Specifically, a driving signal for S1 is generated by cascading a voltage loop and a current loop in the present disclosure. Although a reference current is generated based on an output of the voltage loop, the soft start at an input terminal of the current loop, rather than the voltage loop, functions in starting up the LVDC, thereby controlling the driving signal of S1 based on the soft start of the current loop. In this way, the current flowing through S1 is gradually increased, thereby reducing the impulse current of S 1.

In order to make the above objectives, features and advantages of the present disclosure obvious and understandable, the embodiments of the present disclosure are described in detail below in conjunction with the drawings and the embodiments.

Referring to Figure 2, Figure 2 is a schematic diagram of an LVDC in an on-board charger according to an embodiment of the present disclosure.

It should be understood that as the architecture of the on-board charger according to the present disclosure shown in Figure 1, the output terminal of the LVDC of the on-board charger according to the present disclosure may not be connected to a controllable switch, and an inductor L may be directly connected to the positive output terminal of the LVDC. The output terminal of the LVDC of the on-board charger may be connected to a controllable switch. For example, for safety, a controllable switch is added to the output terminal. In a non-fault condition, the controllable switch may remain closed all the time without performing any operation in coordination with the voltage loop and the current loop.

The technical solutions according to the present disclosure are described in detail below in conjunction with Figure 1 and Figure 2.

In the embodiment, the on-board charger includes a power factor corrector (PFC), a high-voltage direct-current converter (HVDC), a low-voltage direct-current converter (LVDC), and a controller 100. An input terminal of the high-voltage direct-current converter (HVDC) is connected to an output terminal of the power factor corrector (PFC). An input terminal of the low-voltage direct-current converter (LVDC) is connected to an output terminal of the high-voltage direct-current converter (HVDC). An output terminal of the low-voltage direct-current converter (LVDC) is connected to a low-voltage battery. The low-voltage direct-current converter (LVDC) includes a main power transistor and a controllable switching transistor.

The controller 100 is configured to: when the low-voltage direct-current converter is performing a startup process (that is, when the LVDC is powered on), generate a driving signal for the main power transistor S1 by soft starting a current loop to control a current flowing through the inductor L connected in series with the main power transistor S1 to be gradually increased, where a predetermined current of the current loop is determined based on a reference current outputted by a voltage loop and an output result of a soft start function; and after the low-voltage direct-current converter completes the startup process, generate a driving signal for the main power transistor by cascading the voltage loop and the current loop, where the voltage loop is configured to output the reference current to an input terminal of the current loop.

When a difference between an output current of the low-voltage direct-current converter and an output result of a minimization unit is controlled within a predetermined range, such as within negative 15% to positive 15%, the low-voltage direct-current converter completes the startup process. The difference between he output current of the low-voltage direct-current converter and the output result of the minimization unit may be positive or negative. The predetermined range is set to avoid repeated hiccups of the circuit.

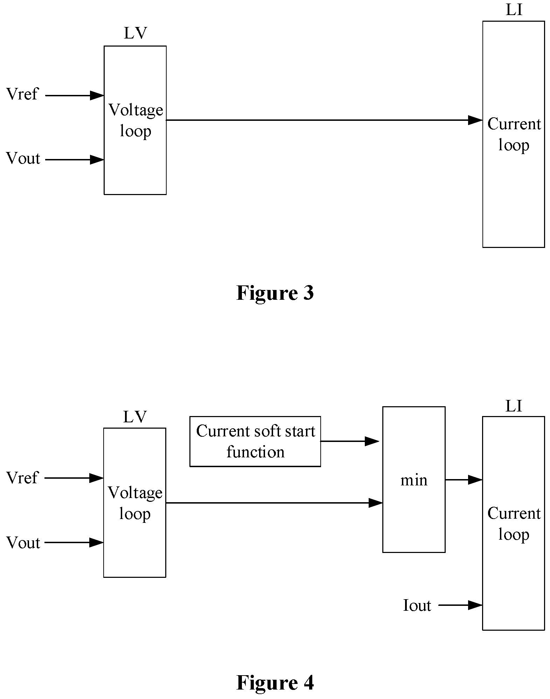

Referring to Figure 3, Figure 3 is a schematic diagram of a dual-loop control manner in which a voltage loop and a current loop are cascaded according to an embodiment of the present disclosure.

In the technical solutions according to the embodiments of the present disclosure, in order to reduce the impact on the forward current of S1 in starting up the LVDC, the current loop LI functions and the voltage loop LV does not function. Since the voltage loop LV does not function, a current soft start control manner, rather than a voltage soft start control manner, is adopted. The output voltage Vout and the predetermined reference voltage Vref are inputted to the voltage loop LV, and the Vout is relatively small in starting up the LVDC, so that the output of the voltage loop LV is invalid. That is, the voltage loop LV does not function, and only the current loop LI functions in the control loop. Since the current loop LI may be controlled in a current soft start manner, the current soft start manner is adopted in starting up the LVDC, controlling the current flowing through the S1 to gradually increase, thereby minimizing the impact on the forward current of the S 1.

The technical solution of current soft start according to the embodiments of the present disclosure is described in detail below in conjunction with Figure 4.

Referring to Figure 4, Figure 4 is a schematic diagram of a dual-loop control manner according to an embodiment of the present disclosure.

An input of the current loop includes an output current Iout of the low-voltage direct-current converter and the output result of the minimization unit min. The current loop LI is configured to compare the output current Iout of the low-voltage direct-current converter with the output result of the minimization unit min, and generate a driving signal for the main power transistor based on a comparison result. The minimization unit min is configured to determine a smaller value between an output result of the voltage loop LV and an output result of a current soft start function. Vout is small in starting up the LVDC. Therefore, after the voltage loop LV compares Vref with Vout, a result with a large value is outputted. The minimization unit min determines a smaller value between parameters inputted to the minimization unit min. Thus, the LV performs no function on min, and min outputs the output result of the current soft start function. Therefore, in starting up the LVDC, only the current loop LI functions in the dual-loop control loop.

In the embodiments of the present disclosure, the implementation form of the soft start function is not limited, as long as the current flowing through S1 can be gradually increased. For example, in an implementation, the soft start function is a soft start ramp function. An output result of the soft start ramp function is a current that gradually increases over time to a predetermined current value. Due to that the startup process is not performed indefinitely, a time length of the startup process may be determined based on a time instant when the LVDC is started up and a slope of the soft start ramp function, and the predetermined current value may be determined based on the slope and the time length of the startup process. When the current reaches the predetermined current value, the soft start function exits, and thus the current soft start is completed. In starting up the LVDC, only the current loop functions and the current loop has the function of current soft start, so that it can be ensured that the forward current flowing through S1 is gradually increased, avoiding an excessive impact on S1, thereby ensuring the safety of S 1. In addition, the soft start function may be reflected as a predetermined graph or table, and control is performed based on data of the graph or the table. For example, the soft start function may be a variable mathematical function and may be adjusted based on Vout.

The input of the voltage loop LV includes the predetermined reference voltage Vref and the output voltage Vout of the low-voltage direct-current converter. The voltage loop LV is configured to generate the reference current based on the predetermined reference voltage Vref and the output voltage Vout of the low-voltage direct-current converter, and output the reference current to the input terminal of the current loop LI.

After the LVDC completes the startup process, Vout gradually increases, and the output of the voltage loop LV is valid and affects the output result of min. The output result of min is the reference current value affected by the voltage loop LV. The current loop LI compares the reference current outputted by the voltage loop LV with Iout, and generates the driving signal for S1 based on a comparison result.

In addition, the parameters of the current loop are variable. The parameters of the current loop before the LVDC is started up may be different from the parameters of the current loop after the LVDC is started up. For different processes, some feature parameters may be changed to improve a response speed. In the charging pile according to the present disclosure, the reference voltage Vref of the voltage loop is set to a desired output voltage of the LVDC without performing voltage soft start processing. The reference current of the current loop is determined based on the output of the current soft start ramp function and the output of the voltage loop. min compares the output of the current soft start ramp function and the output of the voltage loop, and determines a smaller value between the output of the current soft start ramp function and the output of the voltage loop as the reference current of the current loop.

With the above solutions, in a case that the output terminal of the LVDC is connected to a battery as a load, the forward current flowing through the inductor increases slowly, the output voltage increases slowly from an open-circuit voltage of the battery, and when a predetermined current value or a desired output voltage value is reached, the circuit enters into a steady state and the startup process is completed; in a case that the output terminal of the LVDC is connected to a resistor as a load, the forward current of the inductor increases slowly, the output voltage of the LVDC increases slowly from zero, and when the predetermined current value or the desired output voltage value is reached, the LVDC enters into the steady state; and in a case that the output terminal of the LVDC is connected to a mixed load formed by a battery and a resistor connected in parallel, the output voltage of the LVDC increases slowly from the open-circuit voltage of the battery, and when the predetermined current value or the desired output voltage value is reached, the LVDC enters into the steady state, and the output current is automatically distributed based on a proportional relationship between an equivalent internal resistance of the battery and an equivalent internal resistance of the resistor.

After LVDC is just started up, a duty ratio of the driving signal, generated through the current soft start, of S1 is very small and the forward current flowing through the inductor is very small. Thus, in a case that the driving signal of S2 is controlled to be complementary to the driving signal of S1, the duty ratio of the driving signal of S1 is large. A large duty ratio of the driving signal of S2 may result in the following adverse consequences. Since the output terminal of the LVDC is connected to the battery, a large reverse current is to be generated due to the prolonged conduction of S2 in the startup process. That is, the current flowing through the inductor flows from the battery to the input terminal of the LVDC.

It should be understood that the driving signal of S 1 is complementary to the driving signal of S2, or the switching state of S 1 is complementary to the switching state of S2. That is, one of two switches is switched on while the other of the two switches is switched off, and the two switches are not switched on at the same time. In addition, for safety, a dead time interval is configured for S 1 and S2.

In order to enable those skilled in the art to more fully understand the technical solutions according to the present disclosure, the disadvantages caused by the large duty ratio of S2 in starting up the LVDC are described below in conjunction with the drawings.

In the application scenario of the on-board charger, the output terminal of the LVDC is connected to a battery. Therefore, a large reverse current may flow through the inductor due to that S2 is turned off for a long time period in starting up the LVDC.

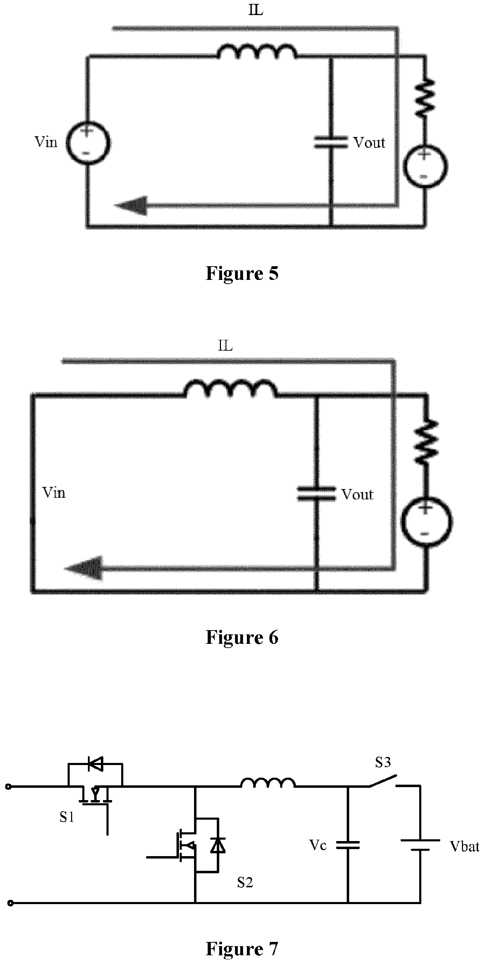

Referring to Figure 5, Figure 5 shows an equivalent circuit in which S 1 is switched on and S2 is switched off. Referring to Figure 6, Figure 6 shows an equivalent circuit in which S1 is switched off and S2 is switched on.

As can be seen from Figure 5, an input power supply Vin is connected in the circuit when S1 is switched on and S2 is switched off. As can be seen from Figure 6, the input voltage Vin is not connected in the circuit when S1 is switched off and S2 is switched on.

In the conventional technology, in order to prevent S2 from being impacted by the reverse current from the battery at the output terminal in starting up the LVDC, a third switch S3 is connected between the inductor and the output terminal, as shown in Figure 7.

Referring to Figure 7, Figure 7 is a schematic diagram of a low-voltage direct-current converter.

In Figure 7, a third switch S3 is connected to the output terminal of the low-voltage direct-current converter, and a voltage soft start manner is adopted to avoid the reverse current flowing through the inductor. Specifically, the third switch S3 is switched on after a voltage across an output capacitor Vc reaches a voltage Vbat of the battery, so as to reduce a current impact caused by a difference between the voltage across the output capacitor Vc and the voltage of the battery. However, with the solution shown in Figure 7, the hardware costs may be increased, and the charging efficiency of the entire charging pile may be reduced.

In order to not increase the hardware costs, that is, to avoid the reverse impulse current in starting up the LVDC without adding the third switch S3, the following two technical solutions are provided according to the present disclosure.

In a first technical solution, the controller is further configured to: when the low-voltage direct-current converter is performing the startup process, control the controllable switching transistor S2 to be turned off; and after the low-voltage direct-current converter completes the startup process, control the main power transistor and the controllable switching transistor S2 to be turned on or turned off in a complementary manner. In order to avoid the reverse impulse current generated by the battery impacting S1 and S2 in starting up the low-voltage direct-current converter, S2 may be controlled to remain in a disconnected state in the startup process, and after the startup process is completed, S2 is controlled to be turned on or turned off normally.

In a second technical solution, the controller is further configured to: when the low-voltage direct-current converter is performing the startup process, control the controllable switching transistor to be turned on when the main power transistor is turned off, and control a duty ratio of the controllable switching transistor to be less than a duty ratio of the main power transistor; and after the low-voltage direct-current converter completes the startup process, control the main power transistor and the controllable switching transistor to be turned on or turned off in a complementary manner.

In the second technical solution, in order to avoid generating a large reverse impulse current, the controllable switching transistor is controlled to operate with a small duty ratio. That is, S2 is controlled to have a short conduction time period. In addition, S2 is turned on when S1 is turned off.

In order to avoid generating a large reverse current flowing through the inductor, the duty ratio of S2 in starting up the low-voltage direct-current converter is limited, so as to limit the reverse current flowing through the inductor. Specifically, in the startup process of the low-voltage direct-current converter, the driving signal for S1 is generated in the dual-loop control manner described in the above embodiments. Based on the duty ratio of the driving signal of S1, the duty ratio of the driving signal of S2 is controlled to gradually increase while ensuring that S2 and S 1 are not switched on simultaneously. After the current soft start is completed, the duty ratio of the driving signal of S2 is no longer controlled, and S2 and S1 may be controlled to operate in a complementary manner.

In the technical solutions according to the present disclosure, in starting up the low-voltage direct-current converter, S1 and S2 are not turned on or turned off in the complementary manner. S2 is controlled to be turned on when S1 is turned off, the driving signal of S2 is controlled not to be complementary to the driving signal of S1, and the duty ratio of S2 is reduced to shorten the conduction time period of S2, thereby avoiding a large reverse current flowing through the inductor.

In the present disclosure, the implementation of S2 in starting up the LVDC is not limited. For example, S2 is controlled to be turned off when it is detected that the LVDC outputs a reverse current. Alternatively, in the current soft start process, the duty ratio of S2 is limited, such as controlling the duty ratio of S2 to increase slowly. It is ensured that in starting up the LVDC, there is no situation in which a large reverse current flowing through the inductor due to continuous large duty ratios of S2.

The on-board charger including the low-voltage direct-current converter is described in the above embodiments. It should be understood that the low-voltage direct-current converter is a buck DCDC converter. The technical solutions according to the embodiments of the present disclosure are applicable to an on-board charger, and applicable to a buck DCDC converter with an output terminal connected to a battery. Therefore, a DCDC converter according to the present disclosure is described below based on the on-board charger according to the above embodiments.

### Embodiments of a DCDC converter

Referring to Figure 2, a buck DCDC converter according to the present disclosure, reference is described briefly. Detailed operation principles may refer to the above descriptions about the on-board charger, and are not repeated herein.

In an embodiment, the buck DCDC converter includes a controller, a main power transistor, a controllable switching transistor, and an inductor. The inductor is connected in series with the main power transistor. An output terminal of the buck DCDC converter is connected to a battery.

The controller is configured to: when the buck DCDC converter is performing a startup process, generate a driving signal for the main power transistor by soft starting a current loop to control a current flowing through the inductor to be gradually increased, where a predetermined current of the current loop is determined based on a reference current outputted by a voltage loop and an output result of a soft start function; and after the buck DCDC converter completes the startup process, generate a driving signal for the main power transistor by cascading the voltage loop and the current loop, where the voltage loop is configured to output the reference current to an input terminal of the current loop.

The current loop may be soft started by using a soft start function. For example, the soft start function is a soft start ramp function, and an output result of the soft start ramp function is a current that gradually increases over time to a predetermined current value.

An input of the current loop includes an output current of the low-voltage direct-current converter and an output result of a minimization unit. The current loop is configured to compare the output current of the low-voltage direct-current converter with the output result of the minimization unit, and then generate a driving signal for the main power transistor based on a comparison result. The minimization unit is configured to determine a smaller value between an output result of the voltage loop and an output result of the soft start function.

The input of the voltage loop includes the predetermined reference voltage and the output voltage of the low-voltage direct-current converter. The voltage loop is configured to generate a reference current based on the predetermined reference voltage and the output voltage of the low-voltage direct-current converter, and output the reference current to the input terminal of the current loop.

The controller is further configured to: when the low-voltage direct-current converter is performing the startup process, control the controllable switching transistor to be turned on when the main power transistor is turned off, and control a duty ratio of the controllable switching transistor to be less than a duty ratio of the main power transistor; and after the low-voltage direct-current converter completes the startup process, control the main power transistor and the controllable switching transistor to be turned on or turned off in a complementary manner.

Based on the on-board charger according to the above embodiments, a method for controlling an on-board charger is further provided according to the present disclosure. The method is described in detail below in conjunction with the drawings.

### Method Embodiments

A method for controlling an on-board charger is provided according to an embodiment of the present disclosure. The on-board charger includes a power factor corrector, a high-voltage direct-current converter, a low-voltage direct-current converter, and a controller. An input terminal of the high-voltage direct-current converter is connected to an output terminal of the power factor corrector. An input terminal of the low-voltage direct-current converter is connected to an output terminal of the high-voltage direct-current converter. An output terminal of the low-voltage direct-current converter is configured to be connected to a low-voltage battery. The low-voltage direct-current converter includes a main power transistor and a controllable switching transistor.

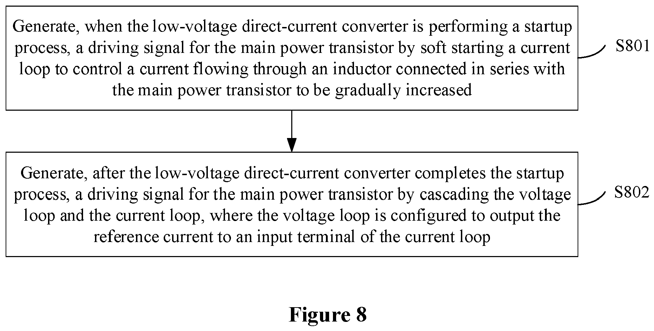

Referring to Figure 8, Figure 8 is a flowchart of a method for controlling an on-board charger according to the present disclosure.

The method includes the following steps S801 and S802.

In step S801, a driving signal for the main power transistor, when the low-voltage direct-current converter is performing a startup process, is generated by soft starting a current loop to control a current flowing through an inductor connected in series with the main power transistor to be gradually increased. The predetermined current of the current loop is determined based on a reference current outputted by a voltage loop and an output result of a soft start function.

The current loop may be soft started by using a soft start function. For example, the soft start function is a soft start ramp function, and an output result of the soft start ramp function is a current that gradually increases over time to a predetermined current value.

In step S802, a driving signal for the main power transistor, after the low-voltage direct-current converter completes the startup process, is generated by cascading the voltage loop and the current loop. The voltage loop is configured to output the reference current to an input terminal of the current loop.

In the method according to the embodiments of the present disclosure and the technical solutions according to the present disclosure, in order to reduce the impulse current flowing through the main power transistor in starting up the low-voltage direct-current converter, the current loop functions and the voltage loop does not function. Since the voltage loop does not function, a current soft start control manner, rather than a voltage soft start control manner, is adopted. The output voltage and the predetermined reference voltage are inputted to the voltage loop, and the output voltage is relatively small when the low-voltage direct-current converter is started, so that the output of the voltage loop is invalid. That is, the voltage loop does not function, and only the current loop functions in the control loop. Since the current loop may be controlled in a current soft start manner, the current soft start manner is adopted in starting up the low-voltage direct-current converter, controlling the current flowing through the main power transistor to gradually increase, thereby minimizing the impact on the forward current of the main power transistor.

The driving signal for the main power transistor, when the low-voltage direct-current converter is performing the startup process, is generated by soft starting the current loop by: inputting an output current of the low-voltage direct-current converter and an output result of a minimization unit to the current loop; comparing, by the current loop, the output current of the low-voltage direct-current converter with the output result of the minimization unit, and generating, by the current loop, the driving signal for the main power transistor based on a comparison result; and determining, by the minimization unit, a smaller value between an output result of the voltage loop and the output result of the soft start function.

The driving signal for the main power transistor is generated by cascading the voltage loop and the current loop by: inputting a predetermined reference voltage and an output voltage of the low-voltage direct-current converter to the voltage loop; and generating, by the voltage loop, the reference current based on the predetermined reference voltage and the output voltage of the low-voltage direct-current converter, and outputting, by the voltage loop, the reference current to the input terminal of the current loop.

The method for controlling an on-board charger according to the embodiments of the present disclosure further includes: controlling, when the low-voltage direct-current converter is performing the startup process, the controllable switching transistor to be turned on when the main power transistor is turned off, and controlling a duty ratio of the controllable switching transistor to be less than a duty ratio of the main power transistor; and controlling, after the low-voltage direct-current converter completes the startup process, the main power transistor and the controllable switching transistor to be turned on or turned off in a complementary manner.

In order to avoid generating a large reverse current flowing through the inductor, the duty ratio of the controllable switching transistor in starting up the low-voltage direct-current converter is limited, so as to limit the reverse current flowing through the inductor. Specifically, in the startup process of the low-voltage direct-current converter, the driving signal for the main power transistor is generated in the dual-loop control manner described in the above embodiments. Based on the duty ratio of the driving signal of the main power transistor, the duty ratio of the driving signal of the controllable switching transistor is controlled to gradually increase while ensuring that the controllable switching transistor and the main power transistor are not switched on simultaneously. After the current soft start is completed, the duty ratio of the driving signal of the controllable switching transistor is no longer controlled, and the controllable switching transistor and the main power transistor may be controlled to operate in a complementary manner.

As can be seen from the above embodiments, it may be clearly appreciated by those skilled in the art that all or a part of steps in the methods according to the above embodiments may be implemented by means of software and a necessary general hardware platform. Based on such understanding, the essential part of the technical solutions of the present disclosure or the part of the technical solutions of the present disclosure contributed to the conventional technology may be embodied in a form of a software product. The computer software product may be stored in a storage medium, such as an ROM/RAM, a magnetic disk and an optical disk, which includes several instructions to cause a computer device (may be a personal computer, a server, a network communication device such as a media gateway, or the like) to execute the method according to the embodiments or some parts of the embodiments of the present disclosure.

It should be noted that the embodiments in this specification are described in a progressive manner. Each of the embodiments focuses on differences with other embodiments, and the same or similar parts of the embodiments may be with reference to each other. Description of the method disclosed in the embodiments is simplified, since the method corresponds to the system disclosed in the embodiments, reference may be made to the description of the system for related explanations.

It should further be noted that, the term "include", "comprise" or any variant thereof is intended to indicate nonexclusive inclusion so that a process, method, article or device including a series of elements includes not only the explicitly described elements but also other elements not explicitly listed or an element(s) inherent to the process, method, article or device. Unless expressively limited otherwise, the statement "comprising (including) one..." does not exclude a case that other similar elements may exist in the process, method, article or device. With the description of the embodiments disclosed above, those skilled in the art may implement or use the present disclosure. Various modifications made to the embodiments are apparent to those skilled in the art, and the general principles defined herein may be implemented in other embodiments without departing from the spirit or scope of the present disclosure. Therefore, the present disclosure is not limited to the embodiments described herein, but should comply with the widest scope consistent with the principles and novel features disclosed herein.

## Claims

1. An on-board charger, comprising:
a power factor corrector;
a high-voltage direct-current converter;
a low-voltage direct-current converter; and
a controller; wherein
an input terminal of the high-voltage direct-current converter is connected to an output terminal of the power factor corrector, an input terminal of the low-voltage direct-current converter is connected to an output terminal of the high-voltage direct-current converter or the output terminal of the power factor corrector, an output terminal of the low-voltage direct-current converter is connected to a low-voltage battery and a low-voltage load, and the low-voltage direct-current converter comprises a main power transistor and a controllable switching transistor; and
the controller is configured to:
when the low-voltage direct-current converter is performing a startup process, generate a driving signal for the main power transistor by soft starting a current loop to control a current flowing through an inductor connected in series with the main power transistor to be gradually increased, wherein a predetermined current of the current loop is determined based on a reference current outputted by a voltage loop and an output result of a soft start function; and
after the low-voltage direct-current converter completes the startup process, generate a driving signal for the main power transistor by cascading the voltage loop and the current loop, wherein the voltage loop is configured to output the reference current to an input terminal of the current loop.

2. The on-board charger according to claim 1, wherein
an input of the current loop comprises an output current of the low-voltage direct-current converter and an output result of a minimization unit;
the current loop is configured to compare the output current of the low-voltage direct-current converter with the output result of the minimization unit, and then generate the driving signal for the main power transistor based on a comparison result;
the minimization unit is configured to determine a smaller value between an output result of the voltage loop and the output result of the soft start function; and
after a difference between the output current of the low-voltage direct-current converter and the output result of the minimization unit is controlled within a predetermined range, the low-voltage direct-current converter completes the startup process.

3. The on-board charger according to claim 2, wherein an input of the voltage loop comprises a predetermined reference voltage and an output voltage of the low-voltage direct-current converter, the voltage loop is configured to generate the reference current based on the predetermined reference voltage and the output voltage of the low-voltage direct-current converter and output the reference current to the input terminal of the current loop.

4. The on-board charger according to claim 3, wherein the soft start function is a soft start ramp function, and an output result of the soft start ramp function is a current that gradually increases over time to a predetermined current value.

5. The on-board charger according to any one of claims 1 to 4, wherein the controller is further configured to:
when the low-voltage direct-current converter is performing the startup process, control the controllable switching transistor to be turned off; and
after the low-voltage direct-current converter completes the startup process, control the main power transistor and the controllable switching transistor to be turned on or turned off in a complementary manner.

6. The on-board charger according to any one of claims 1 to 4, wherein the controller is further configured to:
when the low-voltage direct-current converter is performing the startup process, control the controllable switching transistor to be turned on when the main power transistor is turned off, and control a duty ratio of the controllable switching transistor to be less than a duty ratio of the main power transistor; and
after the low-voltage direct-current converter completes the startup process, control the main power transistor and the controllable switching transistor to be turned on or turned off in a complementary manner.

7. A buck DCDC converter, comprising:
a controller;
a main power transistor;
a controllable switching transistor; and
an inductor; wherein
the inductor is connected in series with the main power transistor;
an output terminal of the buck DCDC converter is connected to a battery; and
the controller is configured to:
when the buck DCDC converter is performing a startup process, generate a driving signal for the main power transistor by soft starting a current loop to control a current flowing through the inductor to be gradually increased, wherein a predetermined current of the current loop is determined based on a reference current outputted by a voltage loop and an output result of a soft start function; and
after the buck DCDC converter completes the startup process, generate a driving signal for the main power transistor by cascading the voltage loop and the current loop, wherein the voltage loop is configured to output the reference current to an input terminal of the current loop.

8. The buck DCDC converter according to claim 7, wherein
an input of the current loop comprises an output current of the low-voltage direct-current converter and an output result of a minimization unit;
the current loop is configured to compare the output current of the low-voltage direct-current converter with the output result of the minimization unit, and then generate the driving signal for the main power transistor based on a comparison result; and
the minimization unit is configured to determine a smaller value between an output result of the voltage loop and the output result of the soft start function.

9. The buck DCDC converter according to claim 8, wherein an input of the voltage loop comprises a predetermined reference voltage and an output voltage of the low-voltage direct-current converter, the voltage loop is configured to generate the reference current based on the predetermined reference voltage and the output voltage of the low-voltage direct-current converter and output the reference current to the input terminal of the current loop.

10. The buck DCDC converter according to claim 8, wherein the soft start function is a soft start ramp function, and an output result of the soft start ramp function is a current that gradually increases over time to a predetermined current value.

11. The buck DCDC converter according to any one of claims 7 to 10, wherein the controller is further configured to:
when the low-voltage direct-current converter is performing the startup process, control the controllable switching transistor to be turned on when the main power transistor is turned off, and control a duty ratio of the controllable switching transistor to be less than a duty ratio of the main power transistor; and
after the low-voltage direct-current converter completes the startup process, control the main power transistor and the controllable switching transistor to be turned on or turned off in a complementary manner.

12. A method for controlling an on-board charger, wherein the on-board charger comprises a power factor corrector, a high-voltage direct-current converter, a low-voltage direct-current converter and a controller, an input terminal of the high-voltage direct-current converter is connected to an output terminal of the power factor corrector, an input terminal of the low-voltage direct-current converter is connected to an output terminal of the high-voltage direct-current converter, an output terminal of the low-voltage direct-current converter is connected to a low-voltage battery, and the low-voltage direct-current converter comprises a main power transistor and a controllable switching transistor; and
the method comprises:
generating, when the low-voltage direct-current converter is performing a startup process, a driving signal for the main power transistor by soft starting a current loop to control a current flowing through an inductor connected in series with the main power transistor to be gradually increased, wherein a predetermined current of the current loop is determined based on a reference current outputted by a voltage loop and an output result of a soft start function; and
generating, after the low-voltage direct-current converter completes the startup process, a driving signal for the main power transistor by cascading the voltage loop and the current loop, wherein the voltage loop is configured to output the reference current to an input terminal of the current loop.

13. The method for controlling an on-board charger according to claim 12, wherein the generating, when the low-voltage direct-current converter is performing a startup process, a driving signal for the main power transistor by soft starting a current loop comprises:
inputting an output current of the low-voltage direct-current converter and an output result of a minimization unit to the current loop;
comparing, by the current loop, the output current of the low-voltage direct-current converter with the output result of the minimization unit, and generating, by the current loop, the driving signal for the main power transistor based on a comparison result; and
determining, by the minimization unit, a smaller value between an output result of the voltage loop and the output result of the soft start function.

14. The method for controlling an on-board charger according to claim 13, wherein the generating a driving signal for the main power transistor by cascading the voltage loop and the current loop comprises:
inputting a predetermined reference voltage and an output voltage of the low-voltage direct-current converter to the voltage loop; and
generating, by the voltage loop, the reference current based on the predetermined reference voltage and the output voltage of the low-voltage direct-current converter, and outputting, by the voltage loop, the reference current to the input terminal of the current loop.

15. The method for controlling an on-board charger according to any one of claims 12 to 14, further comprising:
controlling, when the low-voltage direct-current converter is performing the startup process, the controllable switching transistor to be turned on when the main power transistor is turned off, and controlling a duty ratio of the controllable switching transistor to be less than a duty ratio of the main power transistor; and
controlling, after the low-voltage direct-current converter completes the startup process, the main power transistor and the controllable switching transistor to be turned on or turned off in a complementary manner.

16. The method for controlling an on-board charger according to any one of claims 12 to 14, wherein the soft start function is a soft start ramp function, and an output result of the soft start ramp function is a current that gradually increases over time to a predetermined current value.
